# EUROPEAN PATENT SPECIFICATION

(11) **EP 0 608 428 B1**
(45) Date of publication and mention of the grant of the patent: **30.07.1997**
(21) Application number: 93910343.8
(22) Date of filing: 14.05.1993
(51) Int. Cl.: B25J 13/00, B25J 9/16

(54) **CIRCUIT FOR CUTTING POWER SUPPLY TO ROBOT**
UNTERBRECHUNGSSCHALTUNG FÜR DEN ENERGIEZUFÜHR EINES ROBOTERS
CIRCUIT DE COUPURE DE L'ALIMENTATION D'UN ROBOT

(30) Priority: 27.05.1992 JP 158849/92
(43) Date of publication of application: 03.08.1994
(73) Proprietor: FANUC LTD., Minamitsuru-gun, Yamanashi 401-05 (JP)
(72) Inventor: HASHIMOTO, Yoshiki, Hadano-shi, Kanagawa 257 (JP); SHIMODA, Yasuyuki, Room 11-405, Fanuc Manshon, Minamitsuru-gun, Yamanashi 401-05 (JP); MATSUO, Yasuhiro, Fanuc Dai-3, Minamitsuru-gun, Yamanashi 401-05 (JP)
(74) Representative: Billington, Lawrence Emlyn
(86) International application number: JP9300640
(87) International publication number: WO9324284

(56) References cited:
- EP-A- 0 465 710
- EP-A- 0 474 881
- US-A- 4 795 957

## Description

The present invention relates to a circuit for supplying or interrupting power to robots, which constitutes a robot control system designed for controlling two robots by means of a single controller.

For conventional industrial robots, a controller is provided to each robot, and an emergency stop command from a manual operating panel, a teaching panel, peripheral devices, or the like, or various alarms internally generated by the controller, are used to interrupt power to the robot so that the robot is stopped in emergency.

Recently, a system has been developed in which two robots (manipulators) are controlled by a single controller. For two robots constituting such robot control system, however, an emergency stop means fully meeting various requirements such as those for the installation condition, operating condition, and work efficiency of robots to be controlled by the control system has not been provided.

EP-A-0465710 discloses a device for safety monitoring in protective devices having normal or increased security of machines carrying out multi-axial rotary movements.

An object of the present invention is, on the other hand, to provide a circuit for supplying/interrupting power to a robot control system controlling two robots by means of a single control system, in which an emergency stop means fully adapted to the operational characteristics of the control system is taken for the robots constituting that robot control system.

According to a first aspect of the present invention there is provided a circuit for supplying/interrupting power to robots in a robot control system for controlling two robots by one controller, comprising emergency robot stopping circuitry including a common power interrupting circuit, which simultaneously interrupts power supplies to the two robots, wherein said common interrupting circuit includes a relay contact, installed between a power source and a servo amplifier of each robot, and a relay which corresponds to said relay contact and is connected to an emergency stop signal generating means installed for each robot, so that power supplies to the two robots are simultaneously interrupted by operating said emergency stop signal generating means to cause said relay contact to be turned off; said common power interrupting circuit including two or more relay contacts, connected in series between said power source and said servo amplifier of each robot, and relays which correspond to the respective relay contacts and are connected to at least two of an emergency stop command signal generating means of a peripheral device installed for each robot, an emergency stop command switch installed on a teaching panel, and an emergency stop command switch installed on a manual operating panel of the controller, whereby power supplies to the two robots are simultaneously interrupted by operating either of said emergency stop command signal generating means, or of said emergency stop command switches, to cause a corresponding relay contact to be turned off.

According to a second aspect of the present invention there is provided a circuit for supplying/interrupting power to robots in a robot control system for controlling two robots by one controller, comprising emergency robot stopping circuitry including a common power interrupting circuit, which simultaneously interrupts power supplies to the two robots, wherein said common power interrupting circuit includes a relay contact, installed between a power source and a servo amplifier of each robot, and a relay which corresponds to said relay contact and is connected to an emergency stop signal generating means installed for each robot, so that power supplies to the two robots are simultaneously interrupted by operating said emergency stop signal generating means to cause said relay contact to be turned off, said emergency robot stopping circuitry further including power interrupting circuits for the individual robots which individually interrupt power supply to the individual robots, and said common power interrupting circuit including one or more series-connected relay contacts connected to the power source at one end, and relays which correspond to said relay contacts and are connected to emergency stop command switches of a first type, whereas said power interrupting circuits for the individual robots include one or more series-connected relay contacts, which are connected to the power source at one side and to the servo amplifier of each robot on the other side, and relays, which correspond to said relay contacts and are connected to one or more emergency stop command switches of a second type, whereby power supplies to the two robots are simultaneously interrupted, or power supply to one robot only is interrupted, by activating one of said emergency stop command switches to cause either a relay contact in said common power interrupting circuit, or a relay contact in said power interrupting circuit for an individual robot, to be turned off, depending on whether the activated emergency stop command switch is of the first type or the second type.

Further, according to a development of the second aspect of the present invention, the emergency stop command switch of the first type includes an emergency stop command switch installed on an operating panel of the controller, and said emergency stop command switch of said second type includes an emergency stop comand switch on a peripheral device installed for each respective robot, and an emergency stop command switch installed on a teaching panel for each respective robot.

As described above, according to the present invention, the circuit for supplying/interrupting power to robots, which is used for emergency stop in a robot control system for controlling two robots by a single controller, can be selected according to the characteristics of the control system; for example, a characteristic such that the control system must consider the safety of robot operation with first priority, or a characteristic such that the control system must restrain the decrease in work efficiency of a robot as much as possible since the safety does not present a problem.

### BRIEF DESCRIPTION OF THE DRAWINGS

Fig. 1 is a block diagram of a power interrupting circuit of a robot, showing a first embodiment not in accordance with the present invention, and shown for explanation only;
Fig. 2 is a block diagram of a power interrupting circuit of a robot, showing a second embodiment not in accordance with the present invention, and shown for explanation only;
Fig. 3 is a block diagram of a power interrupting circuit of robot showing an embodiment of the present invention, and
Fig. 4 is a block diagram of a power interrupting circuit of robot showing another embodiment of the present invention.

In a robot control system for controlling two robots by a single controller, when either of two robots constituting the control system receives an emergency stop command, as one measure, only the robot which has received the command is stopped and another robot continues operating, or, as another possible measure, both robots are stopped at the same time.

For example, there may be a case where two adjacent robots are disposed close to each other, and when an operator approaches one robot for teaching the operation to that robot, the operator enters the working area of the other robot. In such a case, if one robot must be stopped in emergency, it is preferred to stop the other robot, too.

On the other hand, there may be another case where two robots are disposed keeping such a large interval therebetween that even when an operator enters the working area of one robot, for example, for teaching, there is little chance for the operator to enter the working area of the other robot. In such a case, even when one robot is stopped, it is not necessary to stop the other robot, and there is no safety problem. It is sometimes better not to interrupt the operation of the robots in order not to invite any further fall of work efficiency.

Also, regardless of the distance between robots, there is a case where it is preferable to have one robot stopped, while the other is kept operating, or there is a case where it is better to stop both robots, depending on the type of stop command or the type of alarm.

Thus, in a robot control system for controlling two robots by a single controller, a power supplying/interrupting circuit of an appropriate constitution is needed depending on the state of the system or the operating condition of the robot in order to stop the robot constituting the control system in emergency.

Therefore, concerning a robot control system for controlling two robots by a single controller, some examples of power supplying/interrupting circuit for stopping the robot in emergency depending on the state of the control system will be presented below.

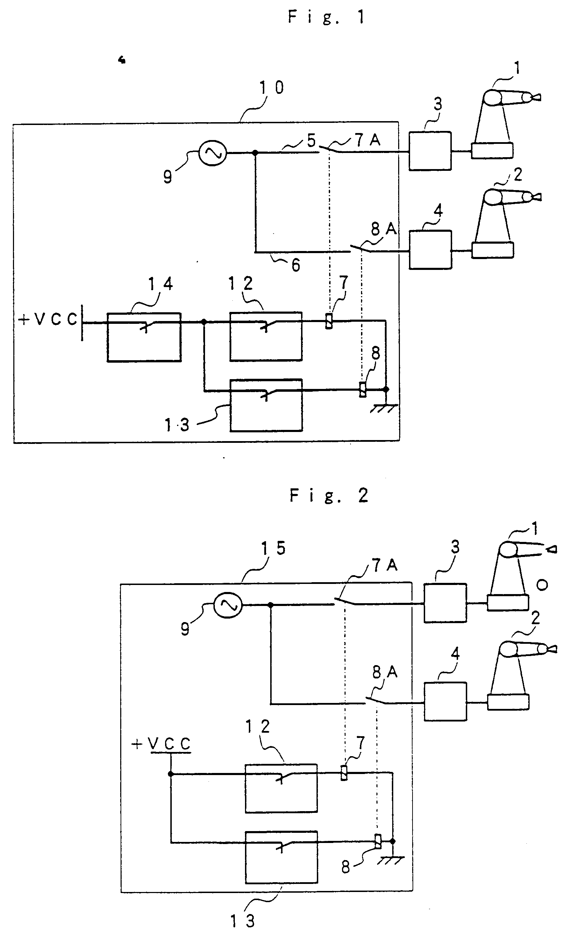

First, a first explanatory embodiment will be described with reference to Fig. 1. In this first embodiment, two robots can selectively be stopped either simultaneously or singly by a command or an alarm.

Fig. 1 is a block diagram of the main portion of a power supplying/interrupting circuit in a system for controlling two robots (manipulators) 1 and 2 by one controller. In Fig. 1, servo amplifiers 3 and 4 of servo motors (not shown) for driving axes of robots 1 and 2 (a servo amplifier is installed for each servo motor of each axis, but only one servo amplifier is shown for each robot in the figure) are respectively connected to a power source 9 by power supply lines 5 and 6 via contacts 7A and 8A of relays 7 and 8, which will be described later.

The relay 7 is connected to a power source Vcc for control via a cutoff switch circuit 12 for robot 1 and a common cutoff switch circuit 14. The relay 8 is connected to a power source Vcc for control via a cutoff switch circuit 13 for robot 2 and a common cutoff switch circuit 14.

When the switch for starting the operation of robots is turned on at the controller 10, the relays 7 and 8 are energized via the common cutoff switch circuit 14 and the cutoff switches 12 and 13 for robot 1 and robot 2, respectively, whereby the relay contacts 7A and 8A are turned on. As a result, power is supplied to the servo amplifier 3 and 4 from the power source 9.

In order to stop two robots 1 and 2 at the same time, the common cutoff switch circuit 14 is operated, and the relays 7 and 8 are deenergized by turning off power supply to two relays 7 and 8. As a result, the relay contacts 7A and 8A are turned off to stop the power supply to the servo amplifier 3 and 4, and both the robot 1 and the robot 2 stop their operation. When only the robot 1 is operated and the robot 2 is stopped, the cutoff switch circuit 13 for robot 2 is operated to deenergize the relay 8 only and turn off the relay contact 8A, so that power supply to the servo amplifier 4 for each axis of the robot 2 is interrupted to stop the operation of robot 2, while the robot 1 remains in operation. When only the robot 2 has to be operated, while the robot 1 is stopped, the cutoff switch circuit 12 for robot 1 is operated to deenergize the relay 7 so that the relay contact 7A is turned off, whereby the power supply to the servo amplifier 3 for each axis of the robot 1 is interrupted to stop the operation of robot 1.

As described above, according to this embodiment, both robots can be stopped at the same time, or only either of the two robots can also be stopped. That is to say, the operation of robots can selectively be stopped by operating the common cutoff switch circuit 14 or the cutoff switch circuits 12 and 13 for each robot depending on the type of an emergency stop command or an alarm.

Next, the power supplying/interrupting circuit in accordance with a second explanatory embodiment will be described. In the second embodiment, like the first embodiment, two robots can be stopped at the same time, or only either of the two robots can also be stopped. This embodiment is the same as the first embodiment shown in Fig. 1, except that the common cutoff switch circuit 14 is not installed in the controller 15. Therefore, in Fig. 2, like reference numerals are applied to the like elements shown in Fig. 1.

Specifically, the controller comprises a cutoff switch circuit 12 for robot 1, which controls a relay 7 for interrupting power supply to a servo amplifier 3 for each axis of the robot 1 by means of a contact 7A, and a cutoff switch circuit 13 for robot 2, which controls a relay 8 for interrupting power supply to a servo amplifier 4 for each axis of the robot 2 by means of a contact 8A.

Thus, when only the robot 1 has to be stopped, the cutoff switch circuit 12 for robot 1 is operated to deenergize the relay 7 so that the relay contact 7A is turned off, whereby power supply to the servo amplifier for each axis of the robot 1 is interrupted. When only the robot 2 has to be stopped, the cutoff switch circuit 13 for robot 2 is operated to deenergize the relay 8 so that the relay contact 8A is turned off, whereby the power supply to the servo amplifier for each axis of the robot 2 is interrupted to stop the operation of the robot 2.

In order to stop both robots, the cutoff switch circuit 12 for robot 1 and the cutoff switch circuit 13 for robot 2 are operated simultaneously. In the second embodiment shown in Fig. 2, although the common cutoff switch circuit 14 in the first embodiment is not provided, the same effect as that of the common cutoff switch circuit 14 in the first embodiment can be obtained by simultaneously operating the cutoff switch circuits 12 and 13 for robots 1 and 2.

In the above first and second embodiments, when an alarm inherent in each robot such as the overtravel or the break of a hand has occurred, or when only one robot has to be stopped in an emergency, one cutoff switch circuit corresponding to the cutoff switch circuit 12 for robot 1 or the cutoff switch circuit 13 for robot 2 is operated to stop the corresponding robot only. When an alarm common to two robots is generated, or when both robots have to be stopped at the same time, both robots can be stopped by operating the common cutoff switch circuit 14 in the first embodiment, or by operating the cutoff switch circuits 12 and 13 for robots 1 and 2 at the same time in the second embodiment.

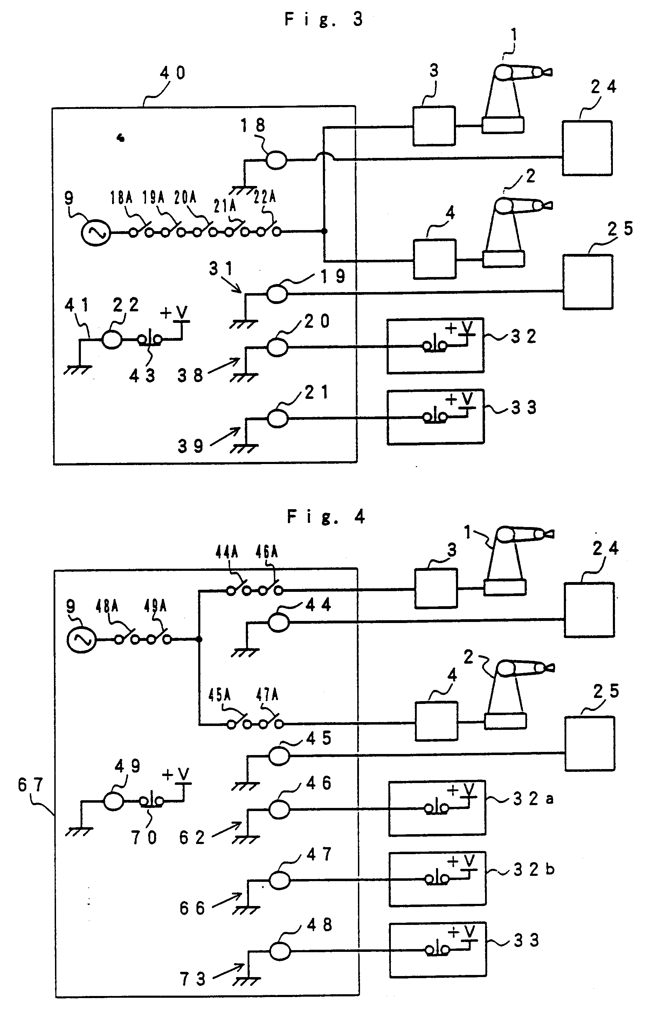

Next, a power supplying/interrupting circuit in accordance with an embodiment of the present invention will be described with reference to the block diagram of Fig. 3. This third embodiment is designed essentially for stopping the two robots 1 and 2 on the basis of an emergency stop command. In this embodiment, the emergency stop command is received from a teaching panel of each robot, a manual operating panel of controller, and a peripheral device provided for each robot. A power supplying/interrupting circuit in a controller 40 is composed of relays only.

In Fig. 3, an emergency stop command signal (alarm) from a peripheral device 24 disposed in association with the robot 1 is inputted to a relay 18 provided in the controller 40 to deenergize the relay 18. Likewise, an emergency stop command signal (alarm) from a peripheral device 25 disposed in association with the robot 2 denerize a relay 19 provided in the controller 40.

Also, relays 20 and 21 are activated by a signal from an emergency stop command switch provided on the teaching panel 32 and another device 33, respectively. An emergency stop command switch 43 disposed on the manual operating panel of the controller 40 deenergizes a relay 22.

The contacts 18A to 22A of relays 18 to 22 are connected in series so that power is supplied from a power source 9 to servo amplifiers 3 and 4 for driving a servo motor for each axis of the robot 1 and 2 via the relay contacts 18A to 22A connected in series.

With this configuration, when the power source is turned on, but an emergency stop command signal is not generated from the peripheral device 24 or 25, the teaching panel 32, the other device 33, or the emergency stop command switch 43, the relays 18 to 22 are in an energized state, so that power is supplied to the servo amplifiers 3 and 4 via the relay contacts 18A to 22A. As a result, the robots 1 and 2 are in an operable state, and are operated according to respective teaching programs. On the other hand, when an emergency stop command is issued from the peripheral device 24 or 25, or when an emergency stop switch of the teaching panel 32, the other device 33 or the controller 40 are activated, one of the relays 18 to 22 is deenergized, so that one of the contacts 18A to 22A is turned off. As a result, power supply to the servo amplifiers 3 and 4 is interrupted, thereby causing both the robots 1 and 2 to be stopped. As described previously, this third embodiment is applied to the case where the robots 1 and 2 are disposed close to each other so that it is dangerous to keep any one robot in operating while the other robot is stopped.

Next, a power supplying/interrupting circuit in accordance with another embodiment of the present invention will be described with reference to Fig. 4. In this fourth embodiment, either both robots or only either one of the robots is stopped depending on the equipment generating an emergency stop command. The power supplying/interrupting circuit in a controller 67 is composed of relays only, like the third embodiment of Fig. 3.

In Fig. 4, an emergency stop command signal (alarm) from a peripheral device 24 disposed for the robot 1 is inputted to a relay 44 disposed in the controller 67 for controlling two robots 1 and 2 to deenergize the relay 44. Likewise, an emergency stop command signal (alarm) from a peripheral device 25 disposed for the robot 2 deenergizes a relay 45. A signal from an emergency stop command switch for both robots 1 and 2 disposed on a teaching panel 32a for robot 1, a teaching panel 32b for robot 2, and another device 33 deenergizes relays 46, 47 and 48, respectively. Further, an emergency stop command switch 70 disposed on a manual operating panel in the controller 67 deenergizes a relay 49.

A servo amplifier 3 for driving a servo motor for each axis of the robot 1 is connected to a power source 9 via contacts 48A, 49A, 44A and 46A of the relays 48, 49, 44 and 46, whereas a servo amplifier 4 for driving a servo motor for each axis of the robot 2 is connected to the power source 9 via contacts 48A, 49A, 45A and 47A of the relays 48, 49, 45 and 47.

When an emergency stop command or an alarm is not generated, and the relays 44 to 49 are in an energized state, the relay contacts 44A to 49A are in ON condition, and the servo amplifiers 3 and 4 are connected to the power source. However, if an emergency stop command is outputted from the peripheral device 24 of the robot 1, or if the emergency stop command switch on the teaching panel 32a for the robot 1 is activated, the relay 44 or the relay 46 is deenergized, so that the contact 44A or 46A is turned off. As a result, power supply to the servo amplifier 3 is interrupted, thereby stopping the robot 1. If an emergency stop command is outputted from the peripheral device 25 of the robot 2, or if the emergency stop command switch on the teaching panel 32b for the robot 2 is activated, the relay 45 or the relay 47 is deenergized, so that the contact 45A or 47A is turned off. As a result, power supply to the servo amplifier 4 is interrupted, thereby stopping the robot 2. Further, if the emergency stop command switch 70 on the manual operating panel of the controller 67 is activated, or if the emergency stop command switch for both robots 1 and 2 which is installed on the other device 33 is activated, the relay 49 or 48 is deenergized, so that the contact 49A or 48A is turned off. As a result, power supply to both the servo amplifiers 3 and 4 for the robots 1 and 2 is interrupted, thereby stopping the robots 1 and 2.

As described above with reference to the embodiments, except the case of the third embodiment, the robot control system for controlling two (or more) robots by a single controller is designed for being capable of stopping any one specific robot, as well as for being capable of stopping all the rest of the robots simultaneously with any one specific robot, thereby making selectively available two different methods for stopping the operation of the robots.

Next, the modifications of the above first, second and fourth embodiments, in which two different methods for stopping the operation of the robot can be selected, will be described below.

For the first embodiment, a plurality of terminals for operating the cutoff switch circuits 12 and 13 for each robot and the common cutoff switch circuit 14 shown in Fig. 1 are installed, and these terminals are selectively connected so that an emergency stop command or an alarm signal is inputted to each switch circuit to cause it to operate. A stop command signal or an alarm can be inputted by selecting the above terminal depending on the position of the robots 1 and 2 or other conditions such as whether only one robot should be stopped or two robots should be stopped at a time.

For the second embodiment, a plurality of input terminals for operating the cutoff switch circuits 12 and 13 shown in Fig. 2 are installed so that an emergency stop command signal or an alarm signal is inputted to either one of the cutoff switch circuits 12 and 13 or both to stop only one robot or both robots according to the system configuration.

For the fourth embodiment, a plurality of input terminals for operating a relay 48 or 49 for stopping both the robots 1 and 2 shown in Fig. 4, or a plurality of input terminals for operating the relay 44, 46 or the relay 45, 47 for stopping only one robot, are installed so that an emergency stop command signal or an alarm signal is inputted by selecting the input terminal. Thus, arbitrary selection can be made for stopping either one robot or both robots according to the system configuration.

## Claims

1. A circuit for supplying/interrupting power to robots (1,2) in a robot control system for controlling two robots (1,2) by one controller (40), comprising emergency robot stopping circuitry including a common power interrupting circuit, which simultaneously interrupts power supplies to the two robots (1,2), wherein said common interrupting circuit includes a relay contact (22A), installed between a power source (9) and a servo amplifier (3,4) of each robot (1,2), and a relay (22) which corresponds to said relay contact (22A) and is connected to an emergency stop signal generating means (43) installed for each robot (1,2), so that power supplies to the two robots (1,2) are simultaneously interrupted by operating said emergency stop signal generating means (43) to cause said relay contact (22A) to be turned off; said common power interrupting circuit including two or more relay contacts (18A to 22A), connected in series between said power source (9) and said servo amplifier (3,4) of each robot (1,2), and relays (18 to 22) which correspond to the respective relay contacts (18A to 22A) and are connected to at least two of an emergency stop command signal generating means (24,25) of a peripheral device installed for each robot (1,2), an emergency stop command switch (32) installed on a teaching panel, and an emergency stop command switch (43) installed on a manual operating panel of the controller (40), whereby power supplies to the two robots (1,2) are simultaneously interrupted by operating either of said emergency stop command signal generating means (24,25), or of said emergency stop command switches (32,43), to cause a corresponding relay contact to be turned off.

2. A circuit for supplying/interrupting power to robots (1,2) in a robot control system for controlling two robots (1,2) by one controller (67), comprising emergency robot stopping circuitry including a common power interrupting circuit, which simultaneously interrupts power supplies to the two robots (1,2), wherein said common power interrupting circuit includes a relay contact (49A), installed between a power source (9) and a servo amplifier (3,4) of each robot (1,2), and a relay (49) which corresponds to said relay contact (49A) and is connected to an emergency stop signal generating means (70) installed for each robot (1,2), so that power supplies to the two robots (1,2) are simultaneously interrupted by operating said emergency stop signal generating means (70) to cause said relay contact (49A) to be turned off, said emergency robot stopping circuitry further including power interrupting circuits for the individual robots (1,2) which individually interrupt power supply to the individual robots (1,2), and said common power interrupting circuit including one or more series-connected relay contacts (48A,49A) connected to the power source (9) at one end, and relays (48,49) which correspond to said relay contacts (48A,49A) and are connected to emergency stop command switches (33,70) of a first type, whereas said power interrupting circuits for the individual robots (1,2) include one or more series-connected relay contacts (44A,46A,45A,47A), which are connected to the power source (9) at one side and to the servo amplifier (3,4) of each robot (1,2) on the other side, and relays (44,46,45,47), which correspond to said relay contacts (44A,46A,45A,47A) and are connected to one or more emergency stop command switches (24,32a,25,32b) of a second type, whereby power supplies to the two robots (1,2) are simultaneously interrupted, or power supply to one robot (1,2) only is interrupted, by activating one of said emergency stop command switches to cause either a relay contact in said common power interrupting circuit, or a relay contact in said power interrupting circuit for an individual robot, to be turned off, depending on whether the activated emergency stop command switch is of the first type or the second type.

3. A circuit for supplying/interrupting power to robots according to claim 2, wherein said emergency stop command switch of said first type includes an emergency stop command switch (70) installed on an operating panel of the controller (67), and said emergency stop command switch of said second type includes an emergency stop comand switch on a peripheral device (24,25) installed for each respective robot (1,2), and an emergency stop command switch installed on a teaching panel (32a,32b) for each respective robot (1,2).

## Patentansprüche

1. Schaltung zur Zuführung/Unterbrechung der Zuführung von Energie zu Robotern (1, 2) in einem Roboterersteuersystem zur Steuerung zweier Roboter (1, 2) mittels einer Steuereinrichtung (40), die eine Roboter-Notstoppschaltungsanordnung umfaßt, welche eine gemeinsame Stromzuführungs-Unterbrechungsschaltung enthält, die gleichzeitig die Stromzuführungen zu den zwei Robotern (1, 2) unterbricht, wobei die gemeinsame Unterbrechungsschaltung enthält: einen Relaiskontakt (22A), der zwischen einer Stromquelle (9) und einem Servoverstärker (3, 4) jedes Roboters (1, 2) eingerichtet ist, und ein Relais (22), das dem Relaiskontakt (22A) entspricht und mit einem Notstoppsignal-Erzeugungsmittel (43) verbunden ist, welches für jeden Roboter (1, 2) eingerichtet ist, so daß die Stromzuführungen zu den zwei Robotern (1, 2) gleichzeitig durch Betätigen des Notstoppsignal-Erzeugungsmittels (43), um zu veranlassen, daß der Relaiskontakt (22A) ausgeschaltet wird, unterbrochen werden, welche gemeinsame Stromzuführungs-Unterbrechungsschaltung enthält: zwei oder mehr Relaiskontakte (18A bis 22A), die in Reihe zwischen die Stromquelle (9) und den Servoverstärker (3, 4) jedes Roboters (1, 2) geschaltet sind, und Relais (18 bis 22), die den jeweiligen Relaiskontakten (18A bis 22A) entsprechen und mit zumindest zwei Notstoppbefehlssignal-Erzeugungsmitteln (24, 25) einer peripheren Einrichtung verbunden sind, die für jeden Roboter (1, 2) eingerichtet sind, einen Notstoppbefehlsschalter (32), der in ein Einlern-Bedienungsfeld eingebaut ist, und einen Notstoppbefehlsschalter (43), der in ein Handbetätigungs-Bedienungsfeld der Steuereinrichtung (40) eingebaut ist, wodurch die Stromzuführungen zu den zwei Robotern (1, 2) gleichzeitig durch Betätigen irgendeines der Notstoppbefehlssignal-Erzeugungsmittel (24, 25) oder der Notstoppbefehlsschalter (32,43), um zu veranlassen, daß ein entsprechender Relaiskontakt ausgeschaltet wird, unterbrochen werden.

2. Schaltung zur Zuführung/Unterbrechung der Zuführung von Energie zu Robotern (1, 2) in einem Roboterersteuersystem zur Steuerung zweier Roboter (1, 2) mittels einer Steuereinrichtung (67), die eine Roboter-Notstoppschaltungsanordnung umfaßt, welche eine gemeinsame Stromzuführungs-Unterbrechungsschaltung enthält, die gleichzeitig die Stromzuführungen zu den zwei Robotern (1, 2) unterbricht, wobei die gemeinsame Stromzuführungs-Unterbrechungsschaltung enthält: einen Relaiskontakt (49A), der zwischen einer Stromquelle (9) und einem Servoverstärker (3, 4) jedes Roboters (1, 2) eingerichtet ist, und ein Relais (49), das dem Relaiskontakt (49A) entspricht und mit einem Notstoppsignal-Erzeugungsmittel (70) verbunden ist, welches für jeden Roboter (1, 2) eingerichtet ist, so daß die Stromzuführungen zu den zwei Robotern (1, 2) gleichzeitig durch Betätigen des Notstoppsignal-Erzeugungsmittels (70), um zu veranlassen, daß der Relaiskontakt (49A) ausgeschaltet wird, unterbrochen werden, wobei die Roboter-Notstoppschaltungsanordnung ferner Stromzuführungs-Unterbrechungsschaltungen für die einzelnen Roboter (1, 2) enthält, die individuell die Stromzuführung zu den einzelnen Robotern (1, 2) unterbrechen, und die gemeinsame Stromzuführungs-Unterbrechungsschaltung enthält: einen oder mehrere in Reihe geschaltete Relaiskontakte (48A, 49A), die an einem Ende mit der Stromquelle (9) verbunden sind, und Relais (48, 49), welche den Relaiskontakten (48A, 49A) entsprechen und mit Notstoppbefehlsschaltern (33, 70) einer ersten Art verbunden sind, während die Stromzuführungs-Unterbrechungsschaltungen für die einzelnen Roboter (1, 2) enthalten: einen oder mehrere in Reihe geschaltete Relaiskontakte (44A, 46A, 45A, 47A), die auf der einen Seite mit der Stromquelle (9) und auf der anderen Seite mit dem Servoverstärker (3, 4) jedes Roboters (1, 2) verbunden sind, und Relais (44, 46, 45, 47), welche den Relaiskontakten (44A, 46A, 45A, 47A) entsprechen und mit einem oder mehreren Notstoppbefehlsschaltern (24, 32a, 25, 32b) einer zweiten Art verbunden sind, wodurch die Stromzuführungen zu den zwei Robotern (1, 2) gleichzeitig unterbrochen werden oder die Stromzuführung zu einem Roboter (1, 2) nur durch Betätigen eines der Notstoppbefehlsschalter, um zu veranlassen, daß irgendein Relaiskontakt in der gemeinsamen Stromzuführungs-Unterbrechungsschaltung oder ein Relaiskontakt in der Stromzuführungs-Unterbrechungsschaltung für einen einzelnen Roboter ausgeschaltet wird, abhängig davon, ob der betätigte Notstoppbefehlsschalter von der ersten Art oder der zweiten Art ist, unterbrochen wird.

3. Schaltung zur Zuführung/Unterbrechung der Zuführung von Energie zu Robotern nach Anspruch 2, wobei der Notstoppbefehlsschalter der ersten Art einen Notstoppbefehlsschalter (70) enthält, welcher in ein Betriebs-Bedienungsfeld der Steuereinrichtung (67) eingebaut ist, und der Notstoppbefehlsschalter der zweiten Art enthält: einen Notstoppbefehlsschalter in einer peripheren Einrichtung (24, 25), welche für jeden betreffenden Roboter (1, 2) angeordnet ist, und einen Notstoppbefehlsschalter, der in ein Einlern-Bedienungsfeld(32a, 32b) für jeden betreffenden Roboter (1, 2) eingebaut ist.

## Revendications

1. Un circuit pour fournir/interrompre le courant vers des robots (1, 2) dans un système de commande de robots permettant de commander deux robots (1, 2) par un seul organe de commande (40), comprenant un ensemble de circuits d'arrêt d'urgence des robots incluant un circuit commun d'interruption de courant qui interrompt simultanément les fournitures de courant vers les deux robots (1, 2), dans lequel ledit circuit commun d'interruption comprend un contact de relais (22A), mis en place entre une source de courant (9) et un servo-amplificateur (3, 4) de chaque robot (1, 2), et un relais (22) qui correspond audit contact de relais (22A) et est relié à un moyen de formation de signal d'arrêt d'urgence (43) mis en place pour chaque robot (1, 2), de manière que les fournitures de courant vers les deux robots (1, 2) soient interrompues simultanément en actionnant ledit moyen de formation de signal d'arrêt d'urgence (43) pour amener ledit contact de relais (22A) à être mis à l'état ouvert ; ledit circuit commun d'interruption de courant comprenant au moins deux contacts de relais (18A à 22A), reliés en série entre ladite source de courant (9) et ledit servo-amplificateur (3, 4) de chaque robot (1, 2), et des relais (18 à 22) qui correspondent aux contacts de relais respectifs (18A à 22A) et sont reliés à au moins deux moyens de formation de signal d'ordre d'arrêt d'urgence (24, 25) d'un dispositif périphérique mis en place pour chaque robot (1, 2), un commutateur d'ordre d'arrêt d'urgence (32) mis en place sur un panneau d'enseignement, et un commutateur d'ordre d'arrêt d'urgence (43) mis en place sur un panneau d'actionnement manuel de l'organe de commande (40), de sorte que les fournitures de courant vers les deux robots (1, 2) sont interrompues simultanément en actionnant l'un quelconque desdits moyens de formation de signal d'ordre d'arrêt d'urgence (24, 25), ou desdits commutateurs d'ordre d'arrêt d'urgence (32, 43), pour amener un contact de relais correspondant à être mis à l'état ouvert.

2. Un circuit pour fournir/interrompre le courant vers des robots (1, 2) dans un système de commande de robots permettant de commander deux robots (1, 2) par un seul organe de commande (67), comprenant un ensemble de circuits d'arrêt d'urgence des robots incluant un circuit commun d'interruption de courant qui interrompt simultanément les fournitures de courant vers les deux robots (1, 2), dans lequel ledit circuit commun d'interruption de courant comprend un contact de relais (49A), mis en place entre une source de courant (9) et un servo-amplificateur (3, 4) de chaque robot (1, 2), et un relais (49) qui correspond audit contact de relais (49A) et est relié à un moyen de formation de signal de d'arrêt d'urgence (70) mis en place pour chaque robot (1, 2), de manière que les fournitures de courant vers les deux robots (1, 2) soient interrompues simultanément en actionnant ledit moyen de formation de signal d'arrêt d'urgence (70) pour amener ledit contact de relais (49A) à être mis à l'état ouvert, ledit ensemble de circuits d'arrêt d'urgence des robots comprenant en outre des circuits d'interruption de courant pour les robots individuels (1, 2) qui interrompent individuellement la fourniture de courant vers les robots individuels (1, 2), et ledit circuit commun d'interruption de courant comprenant un ou plusieurs contacts de relais reliés en série (48A, 49A), reliés à la source de courant (9) à une extrémité, et des relais (48, 49) qui correspondent auxdits contacts de relais (48A, 49A) et sont reliés à des commutateurs d'ordre d'arrêt d'urgence (33, 70) d'un premier type, alors que lesdits circuits d'interruption de courant pour les robots individuels (1, 2) comprennent un ou plusieurs contacts de relais reliés en série (44A, 46A, 45A, 47A), qui sont reliés à la source de courant (9) au niveau d'un côté et au servo-amplificateur (3, 4) de chaque robot (1, 2) sur l'autre côté, et des relais (44, 46, 45, 47), qui correspondent auxdits contacts de relais (44A, 46A, 45A, 47A) et sont reliés à un ou plusieurs commutateurs d'ordre d'arrêt d'urgence (24, 32a, 25, 32b) d'un second type, de sorte que les fournitures de courant vers les deux robots (1, 2) sont interrompues simultanément, ou que la fourniture de courant vers un robot (1, 2) seulement est interrompue, en actionnant un desdits commutateurs d'ordre d'arrêt d'urgence pour amener soit un contact de relais dudit circuit commun d'interruption de courant, soit un contact de relais dudit circuit d'interruption de courant pour un robot individuel, à être mis à l'état ouvert, selon que le commutateur d'ordre d'arrêt d'urgence qui a été actionné est du premier type ou du second type.

3. Un circuit pour fournir/interrompre le courant vers des robots selon la revendication 2, dans lequel ledit commutateur d'ordre d'arrêt d'urgence dudit premier type comprend un commutateur d'ordre d'arrêt d'urgence (70) mis en place sur un panneau de fonctionnement de l'organe de commande (67), et ledit commutateur d'ordre d'arrêt d'urgence dudit second type comprend un commutateur d'ordre d'arrêt d'urgence sur un dispositif périphérique (24, 25) mis en place pour chaque robot respectif (1, 2), et un commutateur d'ordre d'arrêt d'urgence mis en place sur un panneau d'enseignement (32a, 32b) pour chaque robot respectif (1, 2).
